# FASCICULE DE BREVET EUROPEEN

(11) **EP 3 119 731 B1**
(45) Date de publication et mention de la délivrance du brevet: **12.06.2019**
(21) Numéro de dépôt: 15719773.2
(22) Date de dépôt: 17.03.2015
(51) Int. Cl.: C04B 35/053, C04B 35/443, C04B 35/626, C04B 35/653, C04B 38/00

(54) **GRAINS FONDUS D'ALUMINATE DE MAGNÉSIUM RICHE EN MAGNÉSIUM**
VERSCHMOLZENE KÖRNER AUS MAGNESIUMREICHEM MAGNESIUMALUMINAT
FUSED GRAINS OF MAGNESIUM-RICH MAGNESIUM ALUMINATE

(30) Priorité: 18.03.2014 FR 1452232
(43) Date de publication de la demande: 25.01.2017
(73) Titulaire: Saint-Gobain Centre de Recherches et d'Etudes Europeen, 92400 Courbevoie (FR)
(72) Inventeur: RAFFY, Stéphane, F-84300 Cavaillon (FR)
(74) Mandataire: Saint-Gobain Recherche
(86) Numéro de dépôt international: PCT/FR2015/050642
(87) Numéro de publication internationale: WO 2015/140459

(56) Documents cités:
- WO-A1-01/56948
- WO-A1-2008/025440
- DE-A1- 10 257 001
- FR-A1- 2 853 898
- A.M. Alper ET AL: "The System MgO-MgAl2O4", Journal of the American Ceramic Society, vol. 45, no. 6 2 juin 2006 (2006-06-02), pages 263-268, XP055150527, DOI: 10.1111/j.1151-2916.1962.tb11141.x Extrait de l'Internet: URL:http://onlinelibrary.wiley.com/doi/10. 1111/j.1151-2916.1962.tb11141.x/pdf [extrait le 2014-11-03]
- I. G. MARYASEV ET AL: "Effect of Precursor Raw Materials on the Structure of Fused Alumomagnesian Spinel", REFRACTORIES AND INDUSTRIAL CERAMICS, vol. 44, no. 6, 1 novembre 2003 (2003-11-01), pages 405-410, XP055150696, ISSN: 1083-4877, DOI: 10.1023/B:REFR.0000016779.02545.4c

## Description

L'invention se rapporte à des grains pour applications céramiques constitués essentiellement d'oxydes des éléments Al et Mg sous forme d'aluminate de magnésium riche en magnésium, souvent appelé MMA pour « magnésium rich magnesium aluminate » dans le domaine. L'invention se rapporte également à un procédé de fabrication de tels grains, ainsi qu'à des matériaux, produits ou revêtements céramiques constitués à partir desdits grains, souvent appelés céramiques MMA. De tels matériaux trouvent notamment, mais pas uniquement, leur application dans la fabrication de tube pour SOFC, ou encore dans la fabrication de supports pour la séparation des gaz. De tels matériaux peuvent également être utilisés pour la réalisation de pièces réfractaires pour la fabrication ou la transformation de métaux ou alliages métalliques. Ils peuvent encore être utilisés comme revêtement pour des pièces métalliques ou encore dans les cas de contact entre une pièce céramique et un métal.

Une des caractéristiques essentielles qui a permis l'utilisation de céramique MMA dans de nombreux domaines techniques est leur coefficient de dilatation thermique (CTE). En particulier, les études menées précédemment ont montré que le coefficient de dilatation thermique des céramiques MMA était similaire ou très proche de celui des métaux et qu'en outre celui-ci pouvait être adapté, en fonction de la composition chimique du matériau céramique et de sa microstructure, pour correspondre précisément à celui du métal avec lequel il est en contact. On pourra par exemple se référer à la demande de brevet WO 2004/030131 ou au brevet américain US 6,723,442 B1 à ce sujet.

Certaines publications décrivant des matériaux à base d'aluminate de magnésium riche en magnésium (MMA) et leurs propriétés sont citées ci-après:
- DE 102 57 001 A1,
- A.M. Alper ET AL: "The System MgO-MgAl2O4", Journal of the American Ceramic Society, vol. 45, no. 6 (2006-06-02), pages 263-268,
- WO 2008/025440 A1,
- G. MARYASEV ET AL: "Effect of Precursor Raw Materials on the Structure of Fused Alumino-magnesian Spinel", REFRACTORIES AND INDUSTRIAL CERAMICS, vol. 44, no. 6, (2003-11-01), pages 405-410.

Une autre caractéristique des céramiques MMA pour une utilisation à haute température, est leur stabilité dimensionnelle et en particulier leur résistance au fluage. Par fluage, on entend au sens de la présente invention la capacité du matériau à se déformer sous l'effet des contraintes subies lorsqu'il est soumis à des températures élevées. Les études menées par la société déposante ont cependant révélé, comme il sera démontré dans la suite de la description, que les céramiques MMA telles que décrites précédemment, en particulier selon le brevet US 6,723,442 B1 cité précédemment, présentaient une relativement faible résistance au fluage, en particulier pour des applications comme la fabrication de supports pour la séparation des gaz.

Ainsi, la présente invention se rapporte à des grains fondus de type MMA pouvant être utilisés pour la fabrication de pièces ou de revêtements céramiques dont la résistance au fluage est sensiblement améliorée, par rapport à l'état actuel de la technique.

De façon surprenante, les travaux menés par la société déposante ont ainsi pu mettre en évidence un lien entre le taux de certaines impuretés des grains et la performance finale de la résistance au fluage du matériau céramique obtenu à partir de ceux-ci.

Plus précisément, la présente invention se rapporte à un grain fondu (ou à un mélange de grains fondus) constitué essentiellement d'une matrice d'un oxyde de magnésium et d'aluminium de structure spinelle MgAl₂O₄ et/ou de l'eutectique MgO-MgAl₂O₄, ladite matrice comprenant des inclusions constituées essentiellement d'oxyde de magnésium, ledit grain présentant la composition chimique globale suivante, en pourcentages poids exprimés sous la forme d'oxydes :
- plus de 20,0% et moins de 50,0% d'Al₂O₃,
- Al₂O₃ et MgO représentent ensemble plus de 95,0% du poids dudit grain,
ledit grain étant caractérisé en ce que le taux cumulé de CaO et de ZrO₂ est inférieur à 4000 ppm, en poids.

Le grain selon l'invention peut comprendre, notamment sous forme d'impuretés, jusqu'à 5% d'autres oxydes.

De préférence, le taux cumulé de CaO et de ZrO₂ est inférieur à 3500 ppm, de préférence encore inférieur à 3000 ppm, et de manière très préférée inférieur à 2500 ppm en poids. Par taux cumulé, on entend la somme des taux de CaO et de ZrO₂ dans les grains fondus.

De préférence, le taux de CaO est inférieur à 3500 ppm, de préférence encore inférieur à 3000 ppm, voire inférieur à 2500 ppm, voire inférieur à 2000 ppm, et de manière très préférée inférieur à 1500 ppm en poids.

De préférence, le taux de ZrO₂ est inférieur à 3000 ppm, de préférence encore inférieur à 2000 ppm, voire inférieur à 1500 ppm, voire inférieur à 1000 ppm, voire inférieur à 500 ppm, et de manière très préférée inférieur à 200 ppm en poids.

De préférence, le grain fondu selon l'invention ne comprend pas de phase structurale alumine Al₂O₃.

De préférence, le taux cumulé de BaO et de SrO est inférieur à 3000 ppm, de préférence encore inférieur à 2500 ppm, et de manière très préférée inférieur à 2000 ppm en poids. Par taux cumulé, on entend la somme des taux de BaO et de SrO dans les grains fondus.

De préférence, le taux de BaO est inférieur à 2500 ppm, de préférence encore inférieur à 2000 ppm, voire inférieur à 1500 ppm, voire inférieur à 1000 ppm en poids.

De préférence, le taux de SrO est inférieur à 2500 ppm, de préférence encore inférieur à 2000 ppm, voire inférieur à 1500 ppm, voire inférieur à 1000 ppm en poids.

De préférence, le taux de Na₂O est inférieur à 1000 ppm, de préférence encore inférieur à 500 ppm, voire inférieur à 300 ppm.

De préférence, le taux de Fe₂O₃ est inférieur à 1000 ppm, de préférence encore inférieur à 750 ppm, voire inférieur à 500 ppm en poids.

De préférence, le taux de MnO₂ est inférieur à 500 ppm, de préférence encore inférieur à 300 ppm, voire inférieur à 200 ppm, voire inférieur à 100 ppm en poids.

De préférence, le taux de SiO₂ est inférieur à 500 ppm, de préférence encore inférieur à 200 ppm en poids.

De préférence, le taux de TiO₂ est inférieur à 500 ppm en poids.

Selon un mode de réalisation, Al₂O₃ représente plus de 25,0% du poids voire plus de 30,0%, voire plus de 35,0% du poids dudit grain. Al₂O₃ peut représenter moins de 45,0% du poids dudit grain.

De préférence, Al₂O₃ et MgO représentent ensemble plus de 96,0% du poids dudit grain. De préférence encore, Al₂O₃ et MgO représentent ensemble plus de 97,0%, voire plus de 98,0%, voire plus de 99,0%, ou même plus de 99,2% et de manière très préférée au moins 99,4% du poids dudit grain.

De préférence, la matrice du grain fondu selon l'invention est constituée de zones distinctes de structure spinelle et de l'eutectique MgO-MgAl₂O₄.

Le grain fondu selon l'invention comprend des inclusions fines constituées essentiellement d'oxydes de calcium et de zirconium, dont la plus grande dimension est inférieure à 2 micromètres, de préférence inférieure à 1 micromètre, sur un cliché de microscopie électronique.

Par « constitué essentiellement », on entend que la somme cumulée desdits oxydes de calcium et de zirconium représente plus de 80% (en masse) desdites inclusions et de préférence plus de 90%, voire plus de 95% (en masse) desdites inclusions. Ce pourcentage massique est par exemple mesuré par EPMA comme indiqué dans la suite de la description.

La présente invention se rapporte également au matériau céramique obtenu par frittage de grains fondus tels que précédemment décrits, par exemple sous forme de pièce céramique ou de revêtement céramique.

Un tel matériau est notamment caractérisé en ce qu'il peut comprendre des inclusions fines constituées essentiellement d'oxydes de calcium et de zirconium, dont le nombre est inférieur à 100 pour 10000 micromètre carré, sur un cliché de microscopie électronique.

Au sens de la présente invention on donne les définitions et indications suivantes :
Conformément aux habitudes dans le domaine des céramiques, la composition chimique des grains, en particulier selon les éléments constitutifs principaux Al et Mg, est donnée dans la présente description, sauf mention contraire explicite, par référence aux oxydes simples correspondants Al₂O₃ ou MgO, même si ledit élément n'est pas présent ou n'est présent que seulement partiellement sous cette forme. Il en est de même pour les impuretés présentes dans les grains, dont la teneur est donnée par référence à l'oxyde de l'élément correspondant, même si ledit élément est effectivement présent sous une autre forme dans lesdits grains. Une telle description est en outre conforme aux données habituellement fournies par l'analyse chimique élémentaire selon les dispositifs de fluorescence X usuellement utilisés pour déterminer la composition élémentaire des matériaux.

Par « eutectique MgO-MgAl₂O₄ » on entend la structure eutectique correspondant au point de composition, en poids, voisine de 55% d'Al₂O₃ et 45% de MgO et de température voisine de 2000°C dans le diagramme de phases MgO-Al2O3 (point invariant du diagramme de phase pour lequel la réaction liquide vers solide est complète).

On appelle classiquement par « grain fondu », un grain obtenu par un procédé de fabrication comportant au moins une étape de fusion d'un mélange initial de matières premières, une étape de solidification et une étape de broyage.

On appelle « fusion » d'un mélange initial de matières premières un traitement thermique à une température suffisamment élevée pour que tous les constituants du mélange initial se trouvent à l'état fondu (liquide).

Par « impuretés », on entend notamment les constituants inévitables introduits nécessairement avec les matières premières. Les impuretés sont introduites lors de l'étape préliminaire de fabrication des grains fondus par les matières premières.

Les principales impuretés dépendent bien entendu des matières premières utilisées, le plus souvent des poudres commerciales de MgO ou d'Al₂O₃ de pureté supérieure ou égale à 95% poids de l'oxyde. Les principales impuretés détectables dans le grain ou le matériau selon l'invention sont le plus souvent et essentiellement les oxydes de calcium, de fer, de silicium, de manganèse, de sodium, de zirconium ou encore de titane.

L'analyse chimique du matériau obtenu par frittage de grains fondus selon l'invention est sensiblement identique à celle desdits grains fondus. Ainsi, les différents éléments constituant la microstructure du matériau obtenu par frittage de grains fondus selon l'invention sont sensiblement identiques à celle ceux desdits grains fondus.

On appelle « frittage », de façon classique dans le domaine des céramiques, une consolidation par traitement thermique d'un agglomérat granulaire, avec éventuellement une fusion, partielle ou totale, de certains des constituants dudit agglomérat, mais sans fusion d'au moins l'un de ses constituants.

Le frittage selon l'invention est normalement effectué en phase exclusivement solide, et en particulier l'ensemble des constituants des grains fondus restent en phase solide durant ledit frittage.

Selon l'invention, la température de frittage des grains fondus est normalement comprise entre 1200°C et 1650°C.

Un procédé de fabrication des grains précédemment décrits, comporte les étapes suivantes :
a) mélange des matières premières pour former la charge de départ ;
b) fusion de la charge de départ jusqu'à obtention du liquide en fusion;
c) refroidissement dudit liquide en fusion de manière à ce que le liquide fondu soit entièrement solidifié, par exemple en moins de 3 minutes;
d) broyage de ladite masse solide de manière à obtenir un mélange de grains fondus.

Selon l'invention, les matières premières sont choisies à l'étape a) de manière à ce que les grains fondus obtenus à l'étape d) soient conformes à l'invention.

Bien entendu, sans sortir du cadre de l'invention, tout autre procédé conventionnel ou connu de fabrication de grains fondus peut également être mis en oeuvre, pourvu que la composition de la charge de départ permette d'obtenir des grains présentant une composition conforme à celle des grains de l'invention.

A l'étape b), on utilise de préférence un four à arc électrique, mais tous les fours connus sont envisageables, comme un four à induction ou un four à plasma, pourvu qu'ils permettent de faire fondre complètement la charge de départ. La fusion est de préférence effectuée dans des conditions neutres, par exemple sous argon, ou oxydantes, de préférence à pression atmosphérique.

A l'étape c), le refroidissement peut être rapide, c'est-à-dire que le liquide fondu est entièrement solidifié en moins de 3 minutes. De préférence il résulte d'un coulage dans des moules CS tels que décrits dans le brevet US 3,993,119 ou d'une trempe ou encore par une technique de soufflage.

A l'étape d), la masse solide est broyée, selon des techniques conventionnelles, jusqu'à obtenir la taille des grains propre à l'application envisagée. Par exemple, le broyage peut être poursuivi jusqu'à l'obtention de grains de taille micrométrique, par exemple de l'ordre de 0,1 à 50 microns dans certaines applications ou de 20 à 150 microns dans d'autres applications (par exemple de projection thermique) ou même jusqu'à 5 millimètres pour des applications comme la fabrication de matériaux réfractaires.

L'invention et ses avantages seront mieux compris à la lecture des exemples non limitatifs qui suivent. Dans les exemples, sauf indication contraire, tous les pourcentages ainsi que les ppm (parties par million) sont donnés en poids.

### Exemple 1 (conforme à l'enseignement de US 6,723 442 B1)

Dans cet exemple comparatif, on prépare des grains fondus par fusion à partir des matières premières habituelles suivantes :
- une poudre d'oxyde de magnésium (MgO ≥ 98,2% poids) présentant les impuretés suivantes (en pourcentage en poids) : Al₂O₃ : 0,1%, CaO : 0,8%, Fe₂O₃ : 0,4%, SiO₂ : 0,2%, ZrO₂ : 0,1%, MnO₂ : 0,1% ;
- une poudre d'oxyde d'aluminium (Al₂O₃ ≥ 99%) présentant les impuretés suivantes (en pourcentage en poids): Na₂O : 0,23 %, CaO < 0,02%, MgO < 0,05%, Fe₂O₃ < 0,02%, SiO₂ < 0,05%, ZrO₂ < 0,02%, TiO₂ < 0,02%.

Le mélange initial est constitué uniquement à partir de ces deux poudres commerciales mélangées dans un rapport massique MgO/Al₂O₃ de l'ordre de 60/40.

Le mélange de poudre est fondu dans un four à arc à une température de l'ordre de 2100 à 2300°C. Le liquide fondu est solidifié et refroidi. Le produit fondu est ensuite broyé jusqu'à l'obtention d'une poudre de grains fondus dont la taille médiane d₅₀ des particules, telle que mesurée par granulométrie laser, est de l'ordre de 5,4 micromètres.

L'analyse élémentaire par fluorescence X des grains fondus ainsi obtenus permet de déterminer, avec une incertitude relative de l'ordre de 1 %, les concentrations en oxydes Al₂O₃ et MgO. Les valeurs ainsi mesurées sont reportées dans le tableau 1 ci-dessous. L'analyse élémentaire par ICP (Inductively Coupled Plasma-spectrométrie à plasma à couplage inductif) des grains fondus obtenus permet de déterminer, avec une incertitude inférieure à 50 ppm, les concentrations des autres oxydes qui sont reportées dans le tableau 1 ci-dessous. Les grains présentent une teneur en oxyde d'aluminium de 41,5 pourcents poids et une teneur en oxyde de magnésium de 57,4 pourcents poids. Les impuretés détectées sont le calcium (4100 ppm d'équivalent CaO), le fer (3200 ppm d'équivalent Fe₂O₃), le silicium (900 ppm d'équivalent SiO₂), le manganèse (670 ppm d'équivalent MnO₂), le zirconium (600 ppm d'équivalent ZrO₂) et le titane (125 ppm d'équivalent TiO₂).

La porosité et la résistance au fluage sur une pièce céramique obtenue à partir de tels grains est ensuite mesurée.

La poudre de grains fondus est d'abord mise en forme par pressage sous forme de barrette de dimensions :
4,7 mm x 22,5 mm x 111,5 mm.
La pièce ainsi obtenue est ensuite frittée à 1350°C pendant 4 heures.

La porosité et la résistance au fluage de la pièce céramique ainsi préparée sont mesurées selon les protocoles suivants :
**Masse volumique apparente** : rapport égal à la masse de l'échantillon divisée par le volume qu'occupe ledit échantillon.
**Masse volumique absolue** : rapport égal à la masse de matière sèche de l'échantillon après un broyage de l'échantillon à une finesse telle qu'il ne demeure sensiblement aucune porosité, divisée par le volume de la poudre ainsi obtenue après broyage. Elle est mesurée par pycnométrie à hélium après ledit broyage.
**Masse volumique relative** : rapport égal à la masse volumique apparente divisée par la masse volumique absolue, exprimé en pourcentage.
**Porosité** : La porosité, exprimée en pourcentage, est calculée en retranchant la masse volumique relative à 100.
**Fluage** : Le fluage est mesuré en plaçant l'échantillon (de dimensions 4 mm x 20 mm x 102 mm) en configuration quatre points d'appui (distance entre appuis extérieurs L = 80,5 mm, distance entre appuis intérieurs 1 = 40 mm). L'échantillon est ensuite porté à une température de 1100 °C. La température est maintenue constante et l'échantillon est soumis à une contrainte de 12,5 MPa en son milieu. On enregistre la variation de la flèche de l'échantillon tout au long de l'essai. On note Df90 et Df100 la déformation relative, donnée respectivement au bout de 90 heures ou 100 heures. On calcule ensuite une vitesse de fluage V100 = (Df100-Df90)/36000, exprimée en s⁻¹.
Les résultats obtenus sont reportés dans le tableau 1 ci-dessous.

### Exemple 2 (selon l'invention)

Dans cet exemple comparatif, on prépare des grains fondus par fusion à partir des matières premières habituelles suivantes :
- une poudre d'oxyde de magnésium présentant une analyse chimique (en pourcentages en poids) avec MgO ≥ 99% ; CaO ≤ 0,1% ; Na₂O ≤ 0,1% ; SiO₂ ≤ 0,05% ; ZrO₂ ≤ 0,02% ; Fe₂O₃ ≤ 0,02%.
- la même poudre d'oxyde d'aluminium que celle utilisée pour l'exemple 1.

La poudre d'oxyde de magnésium utilisée dans cet exemple se distingue de celle utilisée dans l'exemple 1 par son taux d'impuretés plus faible.

Le mélange initial est constitué uniquement de ces deux poudres commerciales, mélangées dans le même rapport que pour l'exemple précédent.

Le mélange est soumis au même procédé de fusion/solidification/broyage que décrit dans l'exemple 1.

L'analyse chimique est déterminée selon les mêmes techniques que pour l'exemple 1 et est reportée dans le tableau 1 ci-dessous. Les grains présentent une teneur en oxyde d'aluminium de l'ordre de 41,5 pourcents poids et une teneur en oxyde de magnésium de l'ordre de 57,9 pourcents poids. Les impuretés détectées sont le calcium (1091 ppm d'équivalent CaO), le fer (483 ppm d'équivalent Fe₂O₃), le silicium (174 ppm d'équivalent SiO₂), le zirconium (moins de 50 ppm d'équivalent ZrO₂), le titane (320 ppm d'équivalent TiO₂) et le sodium (286 ppm d'équivalent Na₂O) .

Une pièce céramique frittée de mêmes dimensions et de porosité similaire à celle décrite dans l'exemple 1 est préparée à partir des grains de façon similaire à celle décrite dans l'exemple 1, par frittage à 1550°C.

Finalement, la porosité et la résistance au fluage de la pièce céramique frittée ainsi préparée sont mesurées selon les mêmes protocoles que décrits précédemment.

Les résultats obtenus sont reportés dans le tableau 1 ci-dessous.

**Tableau 1**

| Grains fondus | | | | | | | | | |
|---|---|---|---|---|---|---|---|---|---|
| Teneur | Al₂O₃ | MgO | CaO | ZrO₂ | Fe₂O₃ | TiO₂ | SiO₂ | Na₂O | MnO₂ |
| | (%) | | (ppm) | | | | | | |
| Exemple 1 | 41,5 | 57,4 | 4100 | 600 | 3200 | 125 | 900 | <50 | 670 |
| Exemple 2 | 41,5 | 57,9 | 1091 | <50 | 483 | 320 | 174 | 286 | <50 |

| Pièce céramique frittée | | | | | | | | | |
|---|---|---|---|---|---|---|---|---|---|
| Propriété | Porosité (%) | | | Résistance au fluage (s⁻¹) | | | Nombre de zones riches en CaO et ZrO₂ pour 10 000 micromètres² | | |
| Exemple 1 | 22,1 | | | 2.10⁻⁹ | | | 208 | | |
| Exemple 2 | 23,4 | | | 0,7.10⁻⁹ | | | 12 | | |

Les résultats reportés dans le tableau 1 précédant montrent un lien entre le taux d'impuretés et les propriétés de résistance au fluage du matériau : les propriétés de résistance au fluage sont améliorées si le taux de CaO et ZrO₂ est minimisé dans les grains fondus et la pièce céramique frittée obtenue à partir de ces grains.

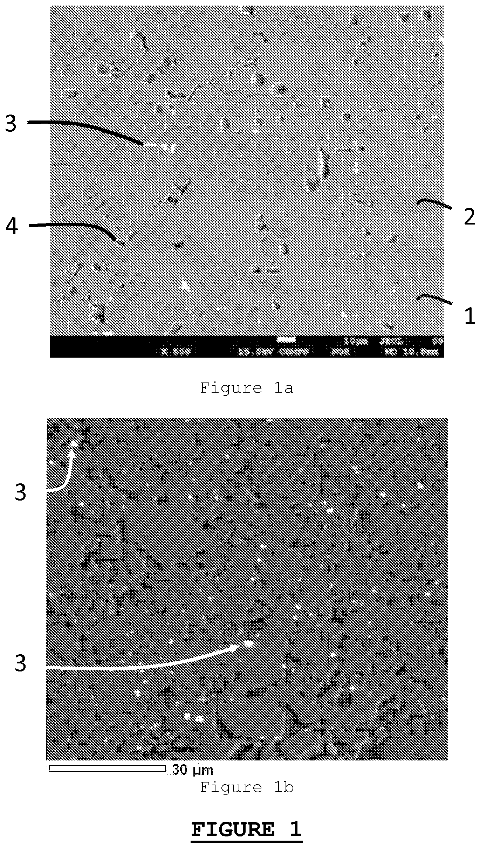

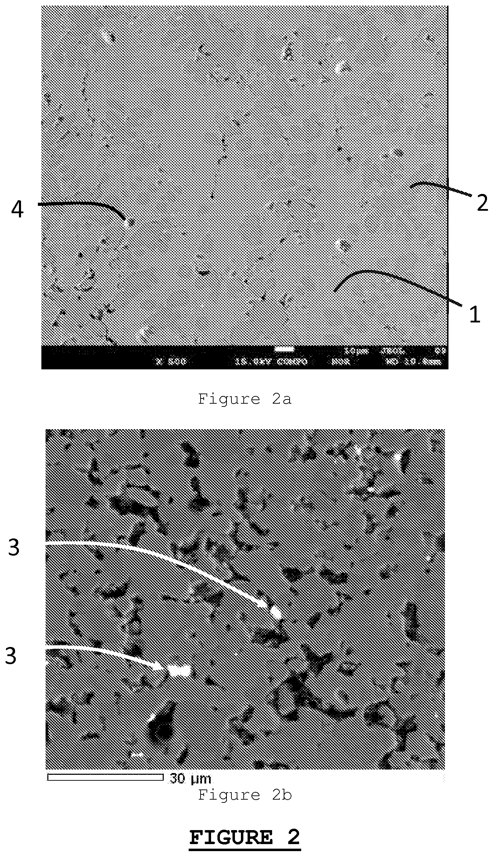

La microstructure des grains fondus et des matériaux frittés constituant les pièces céramiques selon les exemples 1 et 2 a été analysée par microscopie électronique MEB. Les clichés sont reportés dans les figures 1 et 2, correspondant à différents clichés de la microstructure, respectivement selon les exemples 1 et 2. Plus précisément :
- les figures 1a et 1b correspondent respectivement à la microstructure d'un grain fondu et à celle du matériau de la pièce céramique frittée selon l'exemple 1 comparatif,
- les figures 2a et 2b correspondent respectivement la microstructure un grain fondu et à celle du matériau de la pièce céramique frittée de l'exemple 2 selon l'exemple 2 selon l'invention.

La figure 3 est un agrandissement du cliché reporté sur la figure 2a; la largueur de la figure 3 représentant 40 microns. Pour plus de clarté, les éléments principaux visibles sur la figure 3 ont été repris schématiquement dans la figure 4.

Les deux grains/matériaux selon les exemples 1 et 2 présentent chacun une phase matricielle 1 dans laquelle on observe des inclusions larges 2 (en gris plus foncé sur les figures). Des pores 4 apparaissent également dans les deux grains/matériaux (en noir sur les figures). On détecte également sur les deux grains/matériaux selon les exemples 1 et 2 la présence d'inclusions plus fines 3 (en blanc sur les figures).

Par ailleurs, selon une analyse par diffraction des rayons X, les grains fondus et la pièce frittée de l'exemple 2 ne présentent pas de phase d'alumine Al₂O₃.

La comparaison visuelle des figures 1b et 2b montre que ces inclusions fines 3 sont en nombre beaucoup plus restreint pour le matériau selon l'invention, comme reporté dans le tableau 1 ci-avant.

La comparaison visuelle des figures 1b et 2b montre également que ces inclusions fines 3 apparaissent de nature très différente entre les deux photographies : elles sont relativement rares et concentrées sur les photographies selon l'exemple 2 et en plus grand nombre, de plus petite taille et relativement dispersées sur les photographies selon l'exemple 1.

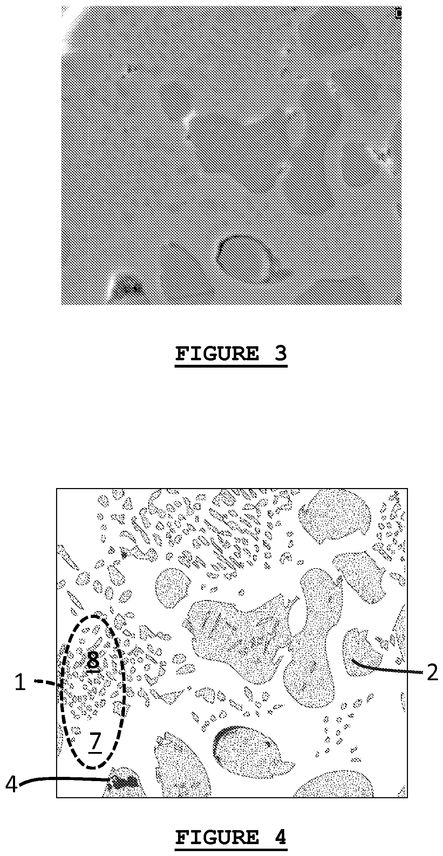

Sur la figure 3 (agrandissement de la figure 2a), on peut observer que la phase matricielle n'est pas unique et uniforme : elle comprend des zones 7 structurellement homogènes et des zones 8 hétérogènes dans lesquelles on observe une dispersion fine de cristaux dans la phase matricielle.

L'analyse des différentes zones par spectrométrie de longueur d'onde (microsonde de Castaing EPMA) a permis de confirmer les observations visuelles et de préciser les compositions des différentes phases et inclusions observées sur les clichés de microscopie électronique des figures 1 et 2 :
- la phase matricielle 1 n'est pas uniforme et est constituée de deux zones bien distinctes 7 et 8 :
   ∘ La zone homogène 7 est constituée d'environ 72 pourcents d'Al₂O₃ et 28 pourcents de MgO, et correspond donc à une phase spinelle MgAl₂O₄ pure ou sensiblement pure,
   ∘ La zone homogène 8 est constituée, en moyenne, d'environ 58 pourcents d'Al₂O₃ et 42 pourcents de MgO, et correspond donc à l'eutectique MgO-MgAl₂O₄ au sens précédemment décrit,
- les inclusions larges 2 (en gris foncé sur les figures) sont constituées très essentiellement, voire exclusivement, de MgO,
- les inclusions fines 3 (en blanc sur les figures) sont constituées très essentiellement, voire exclusivement, d'oxydes de calcium et de zirconium. Les mesures EPMA montrent en particulier que les inclusions sont constituées à plus de 90% (massique) des oxydes de calcium et de zirconium.

Comme indiqué précédemment, les microstructures des matériaux selon les exemples 1 (comparatif) et 2 (selon l'invention) diffèrent essentiellement par la concentration des inclusions constituées principalement des impuretés d'oxydes de Ca et de Zr. La comparaison des données reportées dans le tableau 1 ci-avant permet d'établir un lien direct de causalité entre cette différence structurale et les propriétés améliorées, notamment de résistance au fluage, du matériau obtenu à partir des grains fondus selon l'invention.

## Revendications

1. Grain fondu constitué essentiellement d'une matrice d'un oxyde de magnésium et d'aluminium de structure spinelle MgAl₂O₄ et/ou de l'eutectique MgO-MgAl₂O₄, ladite matrice comprenant des inclusions constituées essentiellement d'oxyde de magnésium, ledit grain présentant la composition chimique globale suivante, en pourcentages poids exprimés sous la forme d'oxydes :
- plus de 20,0% et moins de 50,0% d'Al₂O₃,
- Al₂O₃ et MgO représentent ensemble plus de 95,0% du poids dudit grain,
ledit grain étant **caractérisé en ce que** le taux cumulé de CaO et ZrO₂ est inférieur à 4000 ppm, en poids.

2. Grain fondu selon la revendication 1 dans lequel le taux cumulé de CaO et ZrO₂ est inférieur à 3000 ppm.

3. Grain fondu selon l'une des revendications précédentes, dans lequel le taux cumulé de CaO et ZrO₂ est inférieur à 2500 ppm.

4. Grain fondu selon l'une des revendications précédentes, **caractérisé en ce qu'**il ne comprend pas de phase alumine Al₂O₃.

5. Grain fondu selon l'une des revendications précédentes, dans lequel les impuretés sont essentiellement CaO, ZrO₂, Fe₂O₃, SiO₂, Na₂O, MnO₂.

6. Grain fondu selon l'une des revendications précédentes, comprenant moins de 2000 ppm de CaO.

7. Grain fondu selon l'une des revendications précédentes, comprenant moins de 200 ppm de ZrO₂.

8. Grain fondu selon l'une des revendications précédentes, dans lequel Al₂O₃ et MgO représentent ensemble plus de 99,0% du poids dudit grain.

9. Grain fondu selon l'une des revendications précédentes, dans lequel la matrice est constituée de zones distinctes de structure spinelle et de l'eutectique MgO-MgAl₂O₄.

10. Grain fondu selon l'une des revendications précédentes, comprenant des inclusions fines constituées essentiellement d'oxydes de calcium et de zirconium, dont la plus grande dimension est inférieure à 2 micromètres, de préférence inférieure à 1 micromètre, la somme cumulée desdits oxydes de calcium et de zirconium représente plus de 80% en masse desdites inclusions.

11. Matériau céramique obtenu par frittage de grains fondus selon l'une des revendications précédentes.

12. Matériau céramique selon la revendication précédente, comprenant des inclusions fines constituées essentiellement d'oxydes de calcium et de zirconium, dont le nombre est inférieur à 100 pour 10000 micromètre carré, sur un cliché de microscopie électronique, la somme cumulée desdits oxydes de calcium et de zirconium représentant plus de 80% en masse desdites inclusions.

## Patentansprüche

1. Verschmolzenes Korn, bestehend im Wesentlichen aus einer Matrix eines Magnesium- und Aluminiumoxids mit einer Spinellstruktur MgAl₂O₄ und/oder Eutektik MgO-MgAl₂O₄, wobei die Matrix Inklusionen umfasst, die im Wesentlichen aus Magnesiumoxid bestehen, wobei das Korn die folgende globale chemische Zusammensetzung in Gewichtsprozent, ausgedrückt in Form von Oxiden, aufweist:
- mehr als 20,0 % und weniger als 50,0 % Al₂O₃,
- wobei Al₂O₃ und MgO zusammen mehr als 95,0 % des Gewichts des Korns darstellen,
wobei das Korn **dadurch gekennzeichnet ist, dass** der kumulierte Anteil von CaO und ZrO₂ geringer als 4000 ppm an Gewicht beträgt.

2. Verschmolzenes Korn nach Anspruch 1, wobei der kumulierte Anteil von CaO und ZrO₂ geringer als 3000 ppm ist.

3. Verschmolzenes Korn nach einem der vorhergehenden Ansprüche, wobei der kumulierte Anteil von CaO und ZrO₂ geringer als 2500 ppm ist.

4. Verschmolzenes Korn nach einem der vorhergehenden Ansprüche, **dadurch gekennzeichnet, dass** es keine Aluminiumoxidphase Al₂O₃ umfasst.

5. Verschmolzenes Korn nach einem der vorhergehenden Ansprüche, wobei die Verunreinigungen im Wesentlichen CaO, ZrO₂, Fe₂O₃, SiO₂, Na₂O, MnO₂ sind.

6. Verschmolzenes Korn nach einem der vorhergehenden Ansprüche, umfassend weniger als 2000 ppm CaO.

7. Verschmolzenes Korn nach einem der vorhergehenden Ansprüche, umfassend weniger als 200 ppm ZrO₂.

8. Verschmolzenes Korn nach einem der vorhergehenden Ansprüche, wobei Al₂O₃ und MgO zusammen mehr als 99,0 % des Gewichts des Korns darstellen.

9. Verschmolzenes Korn nach einem der vorhergehenden Ansprüche, wobei die Matrix aus verschiedenen Bereichen einer Spinellstruktur und Eutektik MgO-MgAl₂O₄ besteht.

10. Verschmolzenes Korn nach einem der vorhergehenden Ansprüche, umfassend feine Inklusionen, die im Wesentlichen aus Kalzium- und Zirkoniumoxiden bestehen, wobei die größte Abmessung geringer als 2 Mikrometer ist,vorzugsweise geringer als 1 Mikrometer, wobei die kumulierte Summe der Kalzium- und Zirkoniumoxide mehr als 80 Massenprozent der Inklusionen darstellt.

11. Keramisches Material, erhalten durch Sintern von verschmolzenen Körnern nach einem der vorhergehenden Ansprüche.

12. Keramisches Material nach dem vorhergehenden Anspruch, umfassend feine Inklusionen, die im Wesentlichen aus Kalzium- und Zirkoniumoxiden bestehen, deren Anzahl weniger als 100 pro 10000 Quadratmikrometer ist, auf einer Elektronenmikroskopie-Objektplatte , wobei die kumulierte Summe der Kalzium- und Zirkoniumoxide mehr als 80 Massenprozent der Inklusionen darstellt.

## Claims

1. A fused grain essentially composed of a matrix of a magnesium aluminum oxide of spinel structure MgAl₂O₄ and/or of the MgO-MgAl₂O₄ eutectic, said matrix comprising inclusions essentially composed of magnesium oxide, said grain exhibiting the following overall chemical composition, as percentages by weight, expressed in the form of oxides:
- more than 20.0% and less than 50.0% of Al₂O₃,
- Al₂O₃ and MgO together represent more than 95.0% of the weight of said grain,
said grain being **characterized in that** the cumulative content of CaO and ZrO₂ is less than 4000 ppm by weight.

2. The fused grain as claimed in claim 1, in which the cumulative content of CaO and ZrO₂ is less than 3000 ppm.

3. The fused grain as claimed in either of the preceding claims, in which the cumulative content of CaO and ZrO₂ is less than 2500 ppm.

4. The fused grain as claimed in one of the preceding claims, **characterized in that** it does not comprise an alumina Al₂O₃ phase.

5. The fused grain as claimed in one of the preceding claims, in which the impurities are essentially CaO, ZrO₂, Fe₂O₃, SiO₂, Na₂O and MnO₂.

6. The fused grain as claimed in one of the preceding claims, comprising less than 2000 ppm of CaO.

7. The fused grain as claimed in one of the preceding claims, comprising less than 200 ppm of ZrO₂.

8. The fused grain as claimed in one of the preceding claims, in which Al₂O₃ and MgO together represent more than 99.0% of the weight of said grain.

9. The fused grain as claimed in one of the preceding claims, in which the matrix is composed of separate regions of spinel structure and of the MgO-MgAl₂O₄ eutectic.

10. The fused grain as claimed in one of the preceding claims, comprising fine inclusions essentially composed of calcium and zirconium oxides, the greatest dimension of which is less than 2 micrometers, preferably less than 1 micrometer, the cumulative sum of said calcium and zirconium oxides represents more than 80% by weight of said inclusions.

11. A ceramic material obtained by sintering fused grains as claimed in one of the preceding claims.

12. The ceramic material as claimed in the preceding claim, comprising fine inclusions essentially composed of calcium and zirconium oxides, the number of which is less than 100 per 10 000 square micrometers, on an electron microscopy photograph, the cumulative sum of said calcium and zirconium oxides representing more than 80% by weight of said inclusions.
